Europäisches Patentamt

European Patent Office

Office européen des brevets

(19)

(11) EP 0 542 744 B1

# (12) FASCICULE DE BREVET EUROPEEN

(45) Date de publication et mention
de la délivrance du brevet:
**11.12.1996 Bulletin 1996/50**

(21) Numéro de dépôt: **90914742.3**

(22) Date de dépôt: **28.09.1990**

(51) Int Cl.⁶: **H04N 9/75**

(86) Numéro de dépôt international:
**PCT/FR90/00697**

(87) Numéro de publication internationale:
**WO 91/05443 (18.04.1991 Gazette 1991/09)**

(54) **PROCEDE ET DISPOSITIF D'INCRUSTATION D'IMAGES VIDEO COULEUR AUTO-ADAPTATIF**

VERFAHREN UND VORRICHTUNG ZUR AUTOADAPTIVEN EINBLENDUNG VON
FARBVIDEOBILDERN

SELF-ADAPTED COLOUR VIDEO IMAGE OVERLAY DEVICE AND METHOD

(84) Etats contractants désignés:
**DE GB**

(30) Priorité: **06.10.1989 FR 8913085**

(43) Date de publication de la demande:
**26.05.1993 Bulletin 1993/21**

(73) Titulaire: **THOMSON VIDEO EQUIPEMENT
95800 Cergy-Saint-Christophe (FR)**

(72) Inventeurs:
- **GRIMALDI, Jean-Luc
  F-95120 Ermont (FR)**
- **GALICHET, Sylvie 45, rue S.-Germain
  F-60200 Compiègne (FR)**

(74) Mandataire: **Ruellan-Lemonnier, Brigitte et al
THOMSON Multimedia,
9 Place des Vosges
La Défense 5
92050 Paris La Défense (FR)**

(56) Documents cités:
**EP-A- 0 024 973          EP-A- 0 070 174
EP-A- 0 074 824**

- **Fernseh- und Kino- Technik, Volume 43, No. 6,
  Juin 1989, (Heidelberg, DE), H. SCHONFELDER:
  "Digitale HDTV- Bildmischung", pages 301-307**
- **Fernseh- und Kino- Technik, Volume 42, No. 6,
  Juin 1988, (Heidelberg, DE), U. RIEMANN et al.:
  "Methoden der Signalverarbeitung in einem
  Digitalen HDTV- Chromakey-Mischer", pages
  259-264**

## Description

La présente invention se rapporte à un procédé et à un dispositif d'incrustation d'images vidéo couleur auto-adaptatif.

L'incrustation d'images vidéo couleur consiste à extraire, d'une image source, un sujet, tel que personnage ou objet, évoluant devant un fond de couleur uniforme pour le mettre devant un nouveau fond.

Il est connu de définir le fond de couleur uniforme dans le plan $C_R$ $C_B$ (avec $C_R = R-Y$, $C_B = B-Y$, où R,R,Y représentent respectivement le signal de couleur bleue, le signal de couleur rouge, la luminance) par une surface fermée constituée par un quadrilatère Lors de l'analyse de l'image source, ligne par ligne et point par point, un point est considéré comme appartenant au fond si ses composantes $C_R$ et $C_B$ se trouvent à l'intérieur du quadrilatère ; il est considéré comme appartenant à la partie à incruster dans le cas contraire. Ainsi, à chaque ligne de l'image source correspond un signal "clé", ou de commutation, qui, par exemple, a la valeur 1 pour la partie à incruster et la valeur 0 pour le fond, ou vice versa. Cependant, ce signal "clé" ne permet pas un rendu réaliste de l'image incrustée, car les transitions fond/sujet sont très raides et les contours du sujet incrusté sont déchiquetés. Une amélioration du rendu de l'image incrustée est obtenue en lissant la transition fond/sujet de façon à masquer les contours déchiquetés en introduisant une fonction gain sur le signal clé de découpe. Mais dans ce cas, il n'est pas possible de reproduire les détails fins, ni la transparence, ni les ombres, et un liseré de la même couleur que celle du fond (généralement bleue) est apparent sur le contour du sujet.

Un autre procédé d'incrustation d'images est exposé dans le brevet français n°79 20890 (FR-A-2 464 001) déposé au nom de THOMSON-CSF. Il consiste à effectuer une découpe linéaire du sujet à incruster en utilisant une voie à gain élevé fixe permettant d'assurer une découpe franche pour les parties de l'image ne présentant pas d'ambiguïté colorimétrique, et une voie à gain faible variable permettant, à la fois de restituer un effet de transparence et de créer un fondu respectant les détails fins autour du sujet. L'effet d'ombre est obtenu en détectant les faibles niveaux en luminance et en provoquant l'atténuation correspondante du nouveau fond. Cependant, si l'effet d'ombre est bien rendu, les détails fins sont atténués et la transparence présente une coloration de l'ancien fond. Par ailleurs, pour des transitions lentes, la présence d'un liseré de la même couleur que le fond, c'est-à-dire bleuté, est toujours effective.

Un autre procédé d'incrustation d'images, de principe différent de celui des mélangeurs linéaires, permet l'incrustation d'image source rouge, vert, bleu (R,V,B) pour un sujet évoluant devant un fond bleu, vert (éventuellement rouge), très pur. Le procédé consiste tout d'abord à éliminer la couleur du fond dans l'image source par soustraction, en laissant subsister le sujet comme s'il était placé devant un fond noir. Le nouveau fond est ensuite introduit dans l'image source, dans la zone occupée antérieurement par le fond coloré, proportionnellement à la luminosité et à la visibilité de celui-ci. Les transparences ou semi-transparences telles que le verre, la fumée, ou le voile, sont alors entièrement conservées. L'image source n'étant jamais commutée, les détails fins sont également reproduits intégralement dans l'image incrustée. Un module de verrouillage du bleu (respectivement vert ou rouge), permet l'élimination des reflexions du fond coloré sur le sujet dans l'image incrustée. Outre le fait que ce procédé nécessite de très nombreux réglages pour l'obtention d'une image incrustée de qualité, un fond uniforme et pur est nécessaire. Toute non-uniformité du fond est reproduite sur l'image incrustée polluant ainsi le nouveau fond. S'il est possible d'éviter cette pollution du nouveau fond en utilisant une mise à zéro continue et instantanée du fond coloré de l'image source, il n'est alors plus possible de reproduire la transparence et l'ombre. Par ailleurs, l'élimination des réflexions du fond sur le sujet, entraîne selon la couleur du fond utilisé, des dégradations de certaines couleurs (par exemple magenta, si le fond est bleu, jaune et chair si le fond est vert).

D'autres procédés d'incrustation d'images sont connus et plus particulièrement le procédé décrit dans l'article de H. SCHÖNFELDER intitulé "Digitale HDTV - Bildmischung" (FERNSEH UND KINO TECHNIK vol. 43, n°6, Juin 1989 pages 301 à 307) ou encore le procédé décrit dans la demande de brevet européen EP-A- 0 074 824.

La présente invention a pour objet un procédé d'incrustation d'image vidéo couleur permettant d'éviter, ou pour le moins de réduire ces inconvénients sans pour autant nécessiter un nombre de réglages trop important. Ceci est obtenu d'une part en travaillant sur les contours du sujet à incruster, en en faisant un suivi dynamique permettant d'obtenir un gain de découpe dépendant exclusivement de la transition fond/sujet considérée ; ceci permet un réglage automatique du gair différent selon que la transition fond/sujet est large ou étroite et contribue à l'élimination de la frange de la couleur du fond (bleue pour un fond bleu) autour du sujet. D'autre part, le mélange entre sujet et nouveau fond, appliqué selon la clé de découpe obtenue, bien que de principe linéaire, ne prend plus en compte les valeurs des points appartenant à la transition mais des valeurs constantes du sujet et du nouveau fond déterminées en début et en fin de transition. Le mélange linéaire entre sujet et nouveau fond ne fait donc plus intervenir de valeurs de l'image source contenant du bleu provenant du fond coloré et contribue donc également à l'élimination du liseré bleu autour du sujet incrusté. Enfin, les détails fins, les ombres et les transparences sont détectés dans l'image luminance source et réinjectés dans l'image incrustée proportionnellement à leur niveau de luminance selon un processus linéaire à deux seuils, un seuil bas permettant d'éviter de réinjecter le bruit du fond coloré, un seuil haut permettant de déterminer le taux de détails, ombres et transparences de l'image source à transférer dans l'image incrustée. Des réglages différents sont possibles pour les parties plus foncées que le fond et pour les parties plus claires. Enfin, une désaturation du nouveau fond est effectuée selon le même principe aux endroits où ont été réincrustés des éléments avec éventuellement une possibilité de recoloration de ceux-ci.

Selon l'invention, le procédé d'incrustation d'images vidéo-couleur, est caractérisé par les caractéristiques de la revendication n°1.

L'invention a également pour objet un dispositif pour la mise en oeuvre de ce procédé.

D'autres caractéristiques et avantages de l'invention apparaîtront clairement dans la description suivante donnée à titre d'exemple non limitatif et faite en regard des figures annexées qui représentent :

- la figure 1, un synoptique du dispositif de mise en oeuvre du procédé, selon l'invention,
- la figure 2, un synoptique de l'obtention du signal clé de découpe, selon l'invention,
- la figure 3, un exemple d'un signal clé de découpe binaire,
- la figure 4, un exemple d'une courbe des distances au voisinage d'une transition T,
- la figure 5, un exemple d'un contour de largeur variable, selon l'invention,

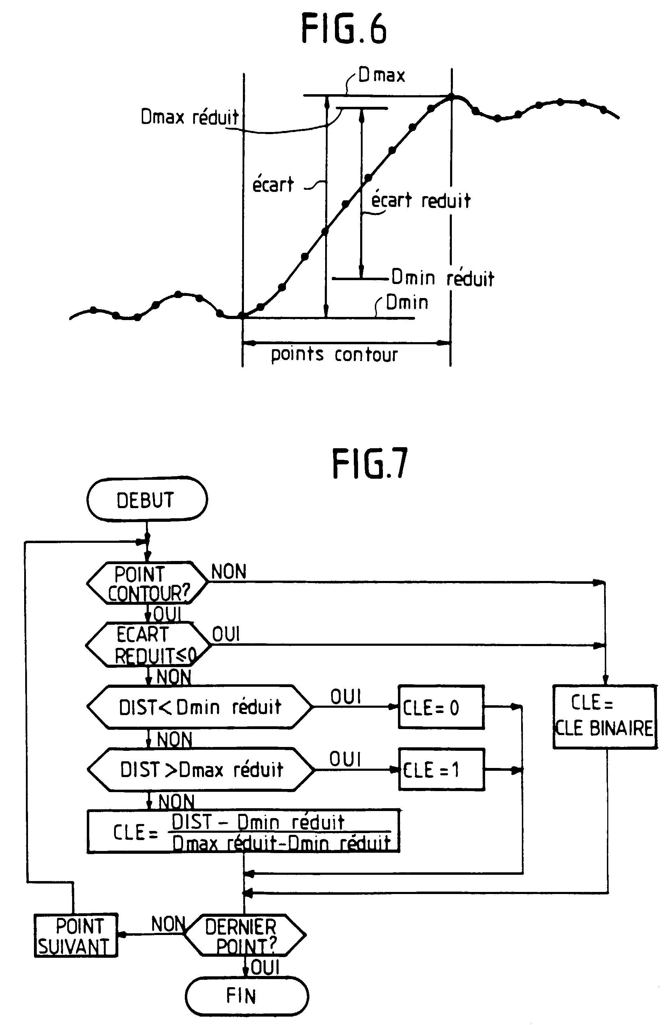

- la figure 6, une illustration de la réduction de l'intervalle des distances sur un contour, selon l'invention,
- la figure 7, un exemple d'organigramme permettant de calculer une clé de découpe avec gain, selon l'invention,
- la figure 8, un exemple d'incrustation des détails, en luminance, selon l'invention,
- la figure 9, un exemple d'incrustation des détails, en chrominance, selon l'invention.

Le signal vidéo source contenant le sujet à incruster placé devant un fond coloré uniforme, par exemple bleu, se compose d'un signal luminance Y, d'un signal de différence de couleur rouge, $C_R$, et d'un signal de différence de couleur bleu, $C_B$, tel que $C_R = R-Y$ et $C_B = B-Y$. Ces signaux Y, $C_R$, $C_B$ sont échantillonnés et numérisés. L'échantillonnage des signaux peut se faire, par exemple, aux fréquences correspondant à la norme internationale, soit 13,5MHz pour le signal de luminance ce qui correspond à 720 points par ligne et 6,75 MHz pour chaque signal de différence de couleur ce qui correspond à 360 points par ligne.

De même, a codage pour numériser les signaux peut être, par exemple, choisi selon la norme internationale, c'est-à-dire un codage à huit bits par échantillon pour chacun des signaux de luminance Y et de différence de couleur $C_R$ et $C_B$. Le codage à huit bits distingue $2^8 = 256$ niveaux répartis sur l'amplitude maximale de variation des trois composantes Y, $C_R$, $C_B$ codées.

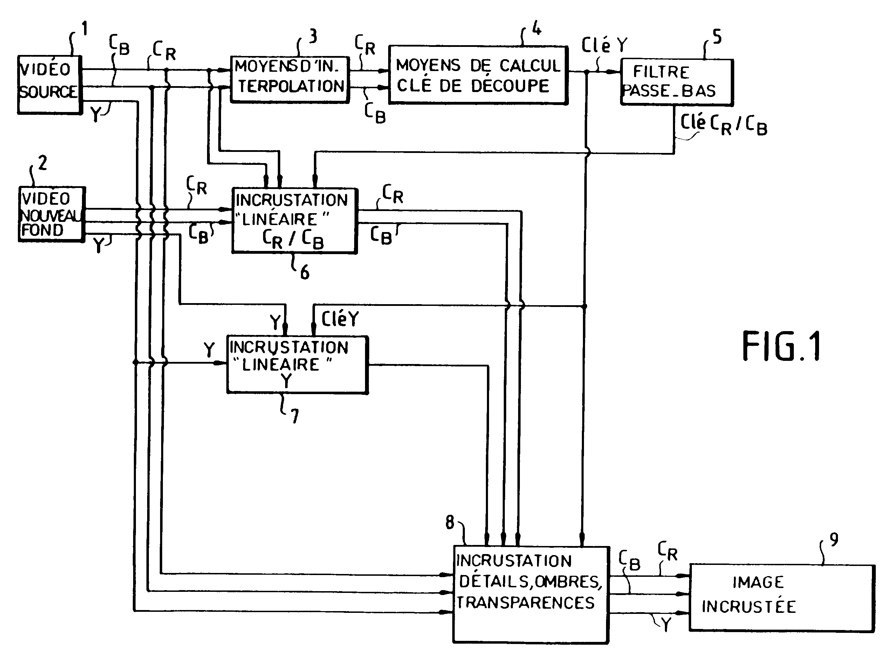

La figure 1 représente un synoptique du dispositif de mise en oeuvre du procédé, selon l'invention. La mise en oeuvre du procédé nécessite des moyens 3 d'interpolation des signaux différence de couleur $C_R$, $C_B$ issus de l'image vidéo source 1 afin d'obtenir un nombre d'échantillons identique pour les signaux différence de couleur et le signal luminance, des moyens 4 de calcul de la clé de découpe permettant l'incrustation du sujet en luminance à partir des signaux différence de couleur interpolés, des moyens 5 formant filtre passe-bas recevant, en entrée, le signal clé de découpe en luminance Y et délivrant, en sortie, le signal clé de découpe $C_R/C_B$ permettant l'incrustation des signaux différence de couleur, des moyens 6 recevant, en entrée, les signaux différence de couleur $C_R$, $C_B$ source issus de l'image vidéo source 1 et $C_R$, $C_B$ fond issus de l'image vidéo nouveau fond 2, ainsi que le signal clé de découpe $C_R/C_B$ pour réaliser l'incrustation des signaux différence de couleur, des moyens 7 recevant en entrée les signaux luminance Y source et Y fond ainsi que le signal clé de découpe Y pour réaliser l'incrustation du signal luminance, et des moyens 8 recevant en entrée les signaux luminance Y et différence de couleur $C_R$, $C_B$ du signal vidéo source et du signal vidéo après incrustation ainsi que le signal clé de découpe Y, permettant de réaliser l'incrustation des détails, des ombres et des transparences et d'obtenir l'image incrustée définitive 9.

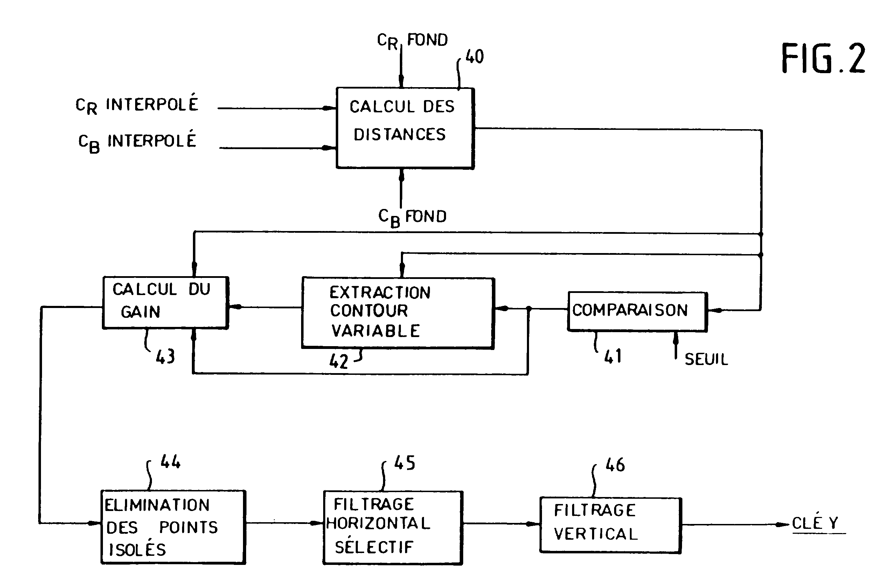

La figure 2 représente un synoptique d'un dispositif d'obtention du signal clé de découpe, selon l'invention. Un signal clé de découpe permettant de traiter la luminance Y, est obtenu à partir des signaux de différence de couleur $C_R$ et $C_B$. Or, les signaux de différence de couleur $C_R$, $C_B$ étant échantillonnés à une fréquence moitié de celle du signal de luminance Y, seule une information sur deux est utilisable. Pour doubler le nombre d'échantillons, un dispositif d'interpolation 3 calcule les échantillons $C_{Ri}$, $C_{Bi}$ manquants (indices impairs), par exemple, par une formule de filtrage numérique dépendant du filtre interpolateur utilisé. Les signaux $C_R$, $C_B$ interpolés sont alors utilisés dans le dispositif de calcul de la clé de découpe, 4. Tout d'abord une distance DIST entre la couleur du point considéré et la couleur caractéristique du fond est calculée dans le dispositif de calcul des distances 40, pour chaque pixel de l'image, telle que :

$$DIST = [(C_R - C_R fond)^2 + (C_B - C_B fond)^2]^{1/2}.$$

Les paramètres du fond $C_R$ fond et $C_B$ fond, sont acquis automatiquement ou fournis par l'utilisateur. A cet effet, l'utilisateur saisit une fenêtre rectangulaire sur le fond coloré considéré comme représentative de celui-ci. Les valeurs $C_R$ fond et $C_B$ fond sont alors obtenues en faisant la moyenne des valeurs $C_R$ et $C_B$ sur tous les points appartenant à la fenêtre saisie. Plus la fenêtre est étendue, moins la valeur moyenne est sensible au bruit de fond et mieux elle caractérise celui-ci. La différentiation fond/sujet est effectuée, par exemple, en caractérisant le fond par un cercle de centre ($C_R$ fond, $C_B$ fond), et de rayon R seuil dans le plan ($C_R, C_B$). Les points à l'intérieur de ce cercle sont considérés comme appartenant au fond, les autres au sujet.

Pour chaque point, les valeurs de ($C_R$ - $C_R$ fond) et ($C_B$ - $C_B$ fond) sont élevées au carré et sommées puis la racine carrée est extraite afin d'obtenir la distance euclidienne DIST entre la couleur de tout point de l'image source et la couleur du fond, dans le plan chromatique ($C_R$, $C_B$). Le signal distance DIST est alors comparé, dans un dispositif de comparaison 41, à une valeur distance seuil correspondant aux points de rayon R seuil de façon à obtenir une clé de découpe binaire du sujet. Les points dont la distance est inférieure à ce seuil sont considérés comme appartenant au fond (clé = 0), les autres comme appartenant au sujet. Le réglage de la valeur du seuil permet d'optimiser la différentiation fond/sujet. Lorsque la comparaison de la distance euclidienne entre le sujet et le fond avec la valeur seuil est effectuée, la clé de découpe obtenue est une clé binaire. L'utilisation de cette clé pour commuter le sujet à incruster entraînerait, comme il a déjà été dit précédemment, des contours déchiquetés et bleus, d'où la nécessité d'introduire une fonction gain dans la clé de découpe. La nature de la transition est définie par la largeur du contour détectée : un contour étroit correspond à une transition raide, un contour large à une transition lente. Tous les points appartenant à une transition fond/sujet sont considérés comme points de contour. Contrairement à l'art antérieur, le gain est appliqué uniquement sur les transitions fond/sujet de l'image source et de façon variable selon la largeur des contours afin de conserver la même nature de transition sur l'image incrustée, d'éliminer les franges bleues et l'impression de contours déchiquetés. Il faut donc détecter les transitions fond/sujet et caractériser leur nature.

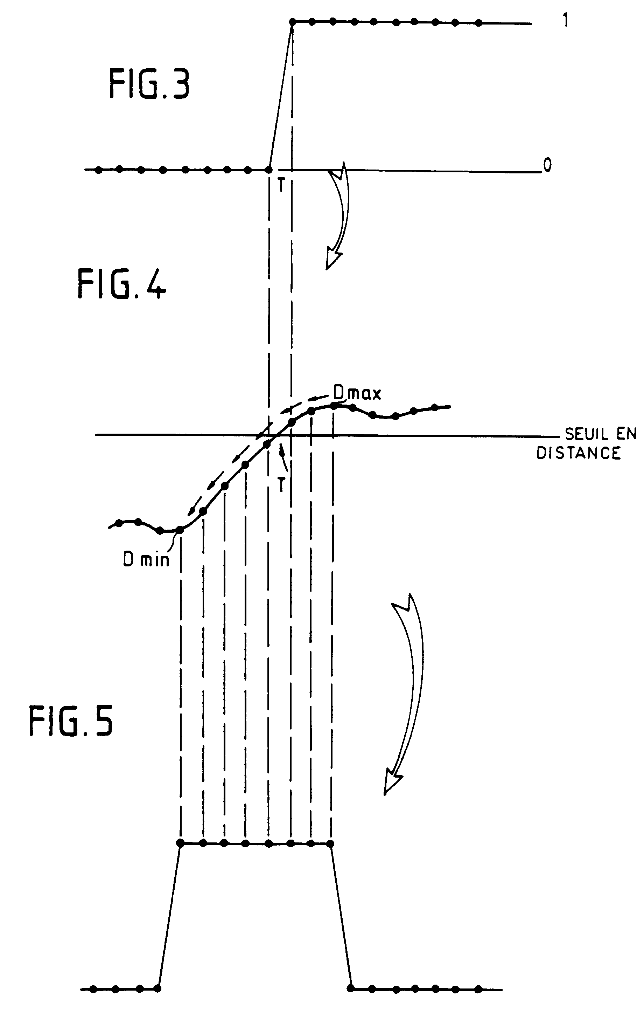

L'extraction d'un contour de largeur variable par un dispositif d'extraction 42, est effectuée sur chaque ligne d'image à partir d'un signal clé de découpe binaire tel que celui représenté sur la figure 3, par exemple. Le signal clé de découpe binaire permet de détecter des transitions fond/sujet ou sujet/fond. Pour chaque ligne d'image, lorsqu'une transition T est détectée, les points situés de part et d'autre de la transition T sont étudiés de façon à déterminer la largeur de la transition. Pour cela un suivi de la courbe des distances est effectué point par point, au voisinage de la transition T.

La figure 4 représente un exemple de courbe des distances pour des points situés au voisinage d'une transition T. Pour une transition fond/sujet, tant que la valeur de distance d'un point situé après (respectivement avant) la transition T augmente (respectivement diminue) suffisamment (par exemple 4 unités normalisées) par rapport à la valeur de distance du point précédent (respectivement suivant), ce point est considéré comme point contour. Pour une transition sujet/fond, la largeur de la transition est déterminée de la même façon mais avec une décroissance de la valeur de distance après la transition et une croissance avant la transition. L'image des points contours est obtenue lorsque toutes les lignes de l'image ont été parcourues.

La figure 5 représente un exemple de contour de largeur variable pour lequel la valeur 1 a été attribuée aux points appartenant au contour et la valeur 0 aux points n'appartenant pas au contour. Une largeur maximale du contour peut être réglée par l'utilisateur, de façon à limiter la largeur des transitions et à les raidir volontairement (par exemple 20 points).

Le calcul du gain par un dispositif de calcul 43 est ensuite effectué pour chaque point appartenant à une transition en fonction de sa valeur de distance, les autres points conservent leur valeur définie par la clé binaire. A cet effet, pour chaque ligne de l'image, et pour chaque transition, les distances minimale Dmin et maximale Dmax correspondant au début et à la fin d'une transition, sont déterminées. L'écart, Dmax - Dmin, entre ces distances minimale et maximale est calculé et réduit de façon à ne pas considérer les valeurs de distance dues aux oscillations de part et d'autre de la transition, introduites lors du filtrage interpolateur.

La réduction de l'écart, Dmax - Dmin, est effectuée par exemple de la manière suivante :

$$\text{Dmin réduit} = \text{Dmin} + 20\% \, (\text{Dmax} - \text{Dmin}).$$

$$\text{Dmax réduit} = \text{Dmax} - 5\% \, (\text{Dmax} - \text{Dmin})$$

La restriction de l'intervalle n'est pas symétrique, car si toutes les précautions prises sur Dmin pour éviter les oscillations n'entraînent pas de problèmes au niveau de l'image incrustée (passage plus rapide au nouveau fond), les mêmes précautions sur Dmax risquent d'entraîner la conservation d'une partie autour du sujet parfois importante et peuvent ainsi générer une frange bleue sur l'image incrustée. Dans ce cas, il est préférable de conserver certaines oscillations plutôt que d'introduire un liseré bleu autour du sujet. Le gain est alors calculé sur les points contour dont la distance est comprise entre les nouvelles valeurs Dmin réduit et Dmax réduit, ceci de façon proportionnelle à la valeur de distance du point considéré, de façon à recréer une transition identique sur l'image incrustée.

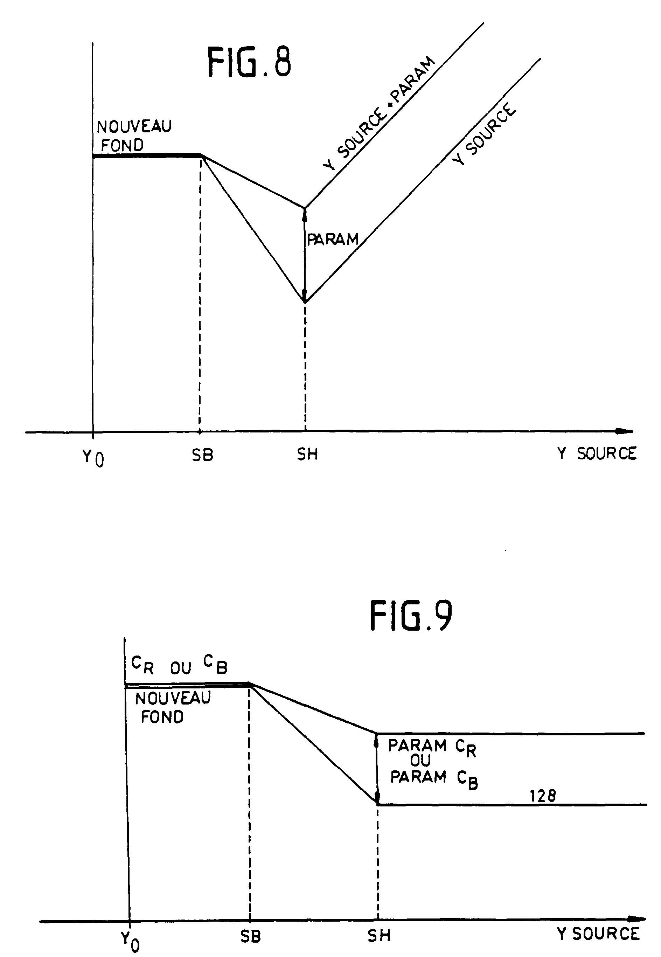

La figure 7 représente un exemple d'organigramme permettant de calculer une clé de découpe avec gain proportionnel à la valeur de distance du point considéré. Pour un point contour, tel que l'écart réduit, Dmax réduit - Dmin réduit, est inférieur ou égal à 0, la clé de découpe est la clé binaire. Si l'écart réduit est supérieur à 0 et la valeur de distance du point considéré est comprise entre Dmin réduit et Dmax réduit, la clé de découpe est obtenue par la formule suivante :

$$\text{clé} = (\text{DIST} - \text{Dmin réduit})/(\text{Dmax réduit} - \text{Dmin réduit})$$

Si l'écart est supérieur à 0 et la valeur de distance du point considéré est inférieure à Dmin réduit (respectivement supérieure à Dmax réduit), la valeur de la clé de découpe est égale à 0 (respectivement égale à 1).

Une clé de découpe ainsi obtenue permet d'incruster l'image source sur le nouveau fond, mais nécessite des traitements spécifiques avant de pouvoir être utilisée de façon satisfaisante. Le premier traitement spécifique concerne l'élimination par un dispositif 44, des points isolés persistant dans la clé, c'est-à-dire tout point dont la valeur de clé de découpe est totalement différente de celle des points voisins. Tout point encadré verticalement ou horizontalement par deux points de valeur de clé 0 (respectivement 1) voit sa valeur de clé mise à 0 (respectivement 1). L'élimination de ces points aberrants, généralement dus au fond coloré de l'image source, permet d'ignorer ceux-ci dans le choix de la valeur de seuil optimal, dans la mesure où ils ne se reproduisent pas sur deux lignes consécutives.

Après élimination des points isolés, la clé de découpe est soumise à un filtrage horizontal sélectif 45. En effet, lorsqu'un contour est pratiquement horizontal, les points appartenant à ce contour ne sont pas détectés car l'extraction du contour est effectuée ligne par ligne, et seules les transitions verticales ou obliques sont recherchées. Le filtrage horizontal sélectif permet de détecter ces transitions horizontales dans la clé de découpe et de les adoucir artificiellement, afin d'éviter qu'elles n'apparaissent comme une ligne brisée dans l'image incrustée.

Enfin, la clé de découpe ayant été obtenue par un traitement ligne par ligne, des décalages entre deux lignes consécutives peuvent apparaître, donnant lieu à un papillotement important de l'image incrustée sur les transitions horizontales. Il apparaît donc nécessaire d'effectuer un filtrage vertical 46, sur la clé de découpe afin de recorreler les diverses lignes entre elles. Par exemple un filtre moyenneur vertical sur trois points donne de bons résultats.

Le signal clé de découpe avec gain obtenu à la fin de ce traitement est directement utilisable pour l'incrustation en luminance. Une clé similaire est calculée pour l'incrustation des signaux différence de couleur, nécessitant un signal échantillonné à une fréquence moitié de celle du signal luminance. La clé de découpe Y est donc passée dans un filtre passe-bas sous échantillonneur pour l'obtention d'une clé de découpe $C_R/C_B$.

Les deux signaux de découpe clé Y et clé $C_R/C_B$ étant disponibles, le mélange entre la vidéo source et la vidéo fond peut être effectué. Bien que constituant deux entités séparées, de par la différence de fréquence, les incrustations en luminance et en différence de couleur sont effectuées de la même façon. Aussi, la description suivante est effectuée sur les signaux luminance mais peut être retranscrite directement pour les signaux différence de couleur.

Un mélange linéaire classique présente un certain nombre d'inconvénients. Dans un mélange linéaire classique, la valeur d'un point incrusté est fonction de la valeur du point source correspondant et du niveau du signal de découpe selon la formule :

$$\text{Yinc}(p) = \text{clé}(p) * \text{Ys}(p) + (1 - \text{clé}(p)) * \text{Ynfond}(p)$$

où Yinc(p), Ys(p) et Ynfond(p) représentent respectivement les valeurs après incrustation, source et nouveau fond d'un point p de l'image.

Ce type de mélange fait apparaître sur les transitions un creux où une sur-hausse en luminance inhérent aux valeurs de Ys(p) et Ynfond(p), sur la transition.

En effet, les valeurs Ys(p) contiennent, pour la plupart des points transition, une partie de luminance du bleu (ou autre) du fond qui est donc réinjectée dans l'image incrustée, provoquant une frange claire ou sombre sur le contour du sujet. Le même inconvénient sur les composantes différence de couleur $C_R$, $C_B$ peut entraîner une coloration de cette frange. L'amélioration apportée consiste à fixer Ys(p) et Ynfond (p), à des valeurs constantes sur la transition, représentant effectivement des valeurs de luminance du sujet et du nouveau fond.

Le mélange pseudo-linéaire est alors effectué selon la formule :

$$\text{Y inc}(p) = \text{clé }(p) * \text{VALSOURCE} + (1 - \text{clé }(p)) * \text{VALFOND}$$

Les valeurs VALSOURCE et VALFOND sont déterminées sur chaque transition. Dans le cas d'une transition fond/sujet, VALFOND est la valeur de Yfond au dernier point avant transition dont la valeur de clé de découpe est 0, VALSOURCE est la valeur de Ys au point dont la valeur de clé de découpe est maximum sur la transition. Le raisonnement inverse est appliqué dans le cas d'une transition sujet/fond.

Les améliorations apportées, d'une part par un contrôle des transitions sur un contour de largeur variable du sujet, d'autre part par un mélange pseudo-linéaire permettent d'obtenir une image incrustée pratiquement parfaite au niveau des transitions sujet/nouveau fond. Toutefois, ni les effets de transparences, ni les détails fins, ni les ombres n'y sont reproduits. Il faut les réinjecter dans l'image incrustée afin d'obtenir l'image incrustée définitive 9.

Il est à noter que les détails fins, la transparence et les ombres sont traités de la même façon. La seule nuance à conserver réside dans le fait que les réglages peuvent être différents dans le cas d'éléments plus clairs que l'ancien fond ou dans le cas d'éléments plus sombres que l'ancien fond. Dans la suite de la description, le terme "détails" signifie à la fois l'effet de transparence (voile, verre, fumée), les ombres, et les détails fins.

Le premier traitement concernant les détails réside dans la détection de ceux-ci.

La figure 8 représente un exemple d'incrustation des détails, en luminance, selon l'invention.

Pour la composante luminance de l'image source, la valeur $Ys(p)-Y_0$ est calculée en chaque point de l'image où la clé de découpe est différente de 1 (fond transitions). Le paramètre $Y_0$ représente la valeur moyenne de la luminance sur le fond, et est calculé en effectuant une moyenne des niveaux de luminance sur la fenêtre saisie par l'utilisateur lors de la détermination de $C_R$ fond et $C_B$ fond. Dans le cas de détails plus clairs que le fond, la valeur $Ys(p) - Y_0$ est considérée telle quelle, dans le cas de détails plus sombres, il faut en prendre la valeur absolue.

Dans la suite, pour simplifier, les valeurs absolues ont été volontairement négligées, seuls les détails clairs sont donc considérés.

Toutefois, le raisonnement utilisé est strictement identique pour les détails sombres, en remplaçant $(Ys(p)-Y_0)$ par $|Ys(p)-Y_0|$.

Si $Ys(p)-Y_0$ est inférieur à un seuil bas SB fixé par l'utilisateur, le point correspondant est considéré comme n'étant pas un détail.

Si $Ys(p)-Y_0$ est supérieur à un seuil haut SH à déterminer par l'utilisateur, le point correspondant est considéré comme faisant partie intégrante d'un détail. Entre les deux seuils SH,SB, le point correspondant est "plus ou moins" détail selon la valeur de $Ys(p)-Y_0$. Autrement dit, les équations permettant l'incrustation des détails clairs en luminance sont les suivantes :

(a). si $Ys(p)-Y_0 < SB$, Yinc(p) non changé
(b). si $Ys(p)-Y_0 > SH$, Yinc(p)=Ys(p) +param
(c). si $SB < Ys(p)-Y_0 < SH$

$$Yinc(p)=[Ynfond(p)-Y_0-SH-param) * (Ys(p)-Y_0)$$

$$+SB(Y_0+SH+param)-Ynfond(p)*SH]/(SB-SH).$$

Le paramètre param permet de régler le niveau de luminance des détails par rapport au niveau de luminance de l'image source.

Entre le seuil haut SH et seuil bas SB, les détails sont réincrustés proportionnellement à la valeur de $Ys(p)-Y_0$. Les coefficients de l'équation (c) ont été calculés de façon à à ce que (a) et (c) fournissent une valeur identique de Yinc(p) dans la condition limite $Ys(p)-Y_0=SB$, de même pour (b) et (c) dans le cas où $Ys(p)-Y_0=SH$.

L'incrustation en luminance des détails nécessite donc le réglage des trois paramètres : SB, SH, param.

Le seuil bas SB permet de régler le niveau à partir duquel un point est un détail. Si SB=O, toutes les non-uniformités de l'ancien fond coloré sont retransposées sur l'image incrustée. Le réglage du seuil bas SB permet donc un compromis entre la pollution du nouveau fond par le bruit de l'ancien fond et la reproduction correcte de détails peu visibles.

Le seuil haut SH, ou plus exactement l'écart entre le seuil haut SH et le seuil SB, permet de définir la zone de proportionnalité de reproduction des détails et donc la pente de la "droite" de proportionnalité (droite dans le cas d'une zone de nouveau fond homogène). Plus la pente de la "droite" est faible (écart SH-SB élevé), plus la proportion de détails retranscrits est faible et vice-versa. Il est à noter que la pente de la "droite" ne dépend pas uniquement de l'écart entre le seuil haut SH et le seuil bas SB mais aussi de l'écart entre la luminance du nouveau fond et la luminance de l'image source. En règle générale, plus l'écart de luminance entre le nouveau fond et l'image source est élevé, plus l'écart entre le seuil haut SH et le seuil bas SB doit être important, pour l'obtention d'un résultat correct.

Enfin, le paramètre "param" autorise une augmentation ou une diminution de la luminance des détails par rapport à celle de l'image source. Dans la plupart des cas, param est fixé à zéro (valeur par défaut), notamment dans le cas fréquent où les détails touchent le sujet. Une valeur non nulle de param provoquerait alors un décalage entre la luminance du sujet et la luminance des détails, générant une discontinuité dans l'image incrustée.

La figure 9 représente un exemple d'incrustation des détails, en différence de couleur, selon l'invention.

L'incrustation des signaux différence de couleur, est effectuée selon le même principe, sauf que au-dessus du seuil haut SH, la couleur des détails retranscrits, n'est pas celle d'origine mais un niveau de gris ($C_R = 128$, $C_B = 128$), et que dans la zone de proportionnalité le nouveau fond est désaturé.

Ainsi

. si $Y_s(p)-Y_0 < SB$, $C_R$inc(p) est inchangé
. si $Y_s(p)-Y_0 > SH$, $C_R$inc(p)=128+param $C_R$
. si $SB < Y_s(p)-Y_0 < SH$

$$C_R\text{inc}(p)= [(C_R\text{nfond}(p)-128-\text{param } C_R)*(Y_s(p)-(Y_0)$$

$$+ SB(128+\text{param } C_R)-C_R\text{nfond}(p)*SH]/(SB-SH)$$

Les mêmes relations sont appliquées pour $C_B$inc(p) en remplaçant $C_R$ par $C_B$, SB et SH étant identiques.

Les valeurs de seuil bas SB et seuil haut SH sont fixées par défaut aux mêmes valeurs que celles utilisées pour l'incrustation en luminance mais peuvent éventuellement être changées par l'utilisateur. De même param $C_R$ et param $C_B$ sont fixés par défaut à la valeur de param (généralement 0), mais peuvent également être changés indépendamment l'un de l'autre, de façon à colorer les détails de l'image incrustée.

Le procédé, selon l'invention, permet l'obtention d'images incrustées satisfaisantes, en nécessitant très peu de réglages dans la grande majorité des cas : un seul et unique réglage de seuil pour une image sans détails, trois réglages (seuil ; SH ; SB) pour une image avec détails plus clairs ou plus sombres que le fond, cinq réglages (seuil ; SH, SB détails clairs ; SH, SB détails sombres) pour une image avec détails clairs et sombres, l'ensemble des autres paramètres définis ci-dessus tels que $C_R$fond, $C_B$fond, $Y_0$, largeur de la fenêtre représentative du fond, distance seuil, pouvant généralement prendre les valeurs fixées par défaut sans dégrader la qualité de l'incrustation.

La présente invention n'est pas limitée aux exemples précisément décrits et représentés.

Diverses modifications peuvent lui être apportées, sans sortir du cadre de l'invention. En particulier, la caractérisation du fond par un cercle peut être remplacée par une caractérisation elliptique. La valeur de distance DIST d'un point de l'image source au fond s'écrirait alors :

$$DIST = [k\,(C_R\text{-}C_R\text{fond})^2 + k_0(C_B\text{-}C_B\text{fond})^2]^{\frac{1}{2}}$$

où k est différent de $k_0$. Il est également possible de changer les axes de l'ellipse ou encore de définir une surface fermée quelconque caractérisant le fond dans le plan chromatique $(C_R,C_B)$.

De même, la détection des contours ligne par ligne, permet uniquement la détection de transitions fond/sujet verticales ou tout du moins traitées comme telles, mais il est possible d'effectuer une détection de contour permettant de définir la direction des transitions et de travailler sur celles-ci perpendiculairement à la direction déterminée.

**Revendications**

1. Procédé d'incrustation d'images vidéo-couleur consistant à incruster un sujet provenant d'une image source dans une image nouveau fond, ledit procédé comprenant la génération d'un signal de commutation, ou de découpe, auquel est appliqué un gain, ladite clé de découpe permettant de commander des transitions (T) permettant de définir le contour dudit sujet par rapport audit nouveau fond, caractérisé en ce que :

   - les transitions (T) permettent de délimiter la largeur dudit contour pour chaque point de chaque ligne de l'image source, par comparaison avec un seuil (SEUIL)de la valeur prise par la distance (DIST) entre la couleur des points de l'image source et celle du nouveau fond, les points situés de part et d'autre de la transition (T) étant parcourus jusqu'à l'obtention d'une valeur de distance minimale (Dmin) et d'une valeur de distance maximale (Dmax) correspondant respectivement au début et à la fin de la transition (T).

   - le gain est appliqué uniquement sur les points de l'image source permettant de délimiter la largeur du contour et proportionnellement à la valeur de la distance (DIST) entre la couleur du point considéré et celle du fond.

2. Procédé selon la revendication 1, caractérisé en ce que le mélange en chaque point de l'image est tel qu'il est fonction de la valeur du signal clé de découpe au point considéré et que les valeurs du signal source et du signal nouveau fond sont fixées à des constantes sur la largeur du contour.

3. Procédé selon la revendication 2 caractérisé en ce que la largeur du contour correspondant à une transition (T) est inférieure à la largeur déterminée par les valeurs de distance maximale (Dmax) et minimale (Dmin).

4.  Procédé selon l'une quelconque des revendications précédentes, caractérisé en ce que la largeur du contour est limitée à une valeur maximale, par l'utilisateur.

5.  Procédé selon l'une quelconque des revendications précédentes, caractérisé en ce que des points isolés, tels que leur valeur de clé est totalement différente de celle des points voisins, sont détectés et éliminés.

6.  Procédé selon l'une quelconque des revendications précédentes, caractérisé en ce que des transitions horizontales sont détectées et lissées.

7.  Procédé selon l'une quelconque des revendications précédentes, caractérisé en ce qu'un filtrage vertical est effectué sur le signal clé de découpe.

8.  Procédé selon l'une quelconque des revendications précédentes, caractérisé en ce que les points de l'image source correspondant à des détails, des ombres et des transparences sont détectés en comparant la différence de luminance (Ys-Y0) entre l'image source et l'ancien fond à deux seuils haut (SH) et bas (SB) et en ce qu'un mélange linéaire entre nouveau fond et source est effectué selon la valeur de cette différence de luminance (Ys-Y0) lorsqu'elle est comprise entre les deux seuils (SB, SH).

9.  Dispositif d'incrustation d'image vidéo-couleurs permettant d'incruster dans une image nouveau fond, un sujet provenant d'une image source composée d'un signal luminance (Y), d'un signal de différence de couleur bleue (Cb) et d'un signal de différence de couleur rouge (Cr) échantillonnés et numérisés, caractérisé en ce qu'il comprend :

    -   des moyens d'interpolation (3) des signaux de différence de couleur (Cb, Cr) permettant de générer des échantillons de couleur bleue (Cb) et rouge (Cr) en nombre identique au nombre d'échantillons de signaux de luminance,
    -   des moyens de calcul (4) permettant de générer une clé de découpe en luminance (clé Y) à partir des échantillons interpolés de couleur bleue (Cb) et rouge (Cr), lesdits moyens de calcul (4) comprenant des moyens (40) permettant de calculer, pour chaque point de chaque ligne de l'image source, la distance (DIST) entre la couleur des points de l'image source et celle du nouveau fond, des moyens (41) de comparaison de ladite distance (DIST) à un seuil (SEUIL) de façon à obtenir une clé de découpe permettant de commander des transitions (T) définissant le contour du sujet à incruster, chaque transition (T) étant parcourue jusqu'à l'obtention d'une valeur de distance minimale (Dmin) et d'une valeur de distance maximale (Dmax) correspondant au début et à la fin de la transition (T), des moyens (43) de calcul de gain proportionnel à la valeur de distance (DIST) précédemment calculée, pour chaque point appartenant au contour,
    -   des moyens (5) formant filtre passe-bas ayant une entrée recevant la clé de découpe en luminance et une sortie délivrant un signal clé de découpe Cr/Cb permettant l'incrustation des signaux différence de couleur,
    -   des moyens (6) d'incrustation des signaux différence de couleur ayant une entrée recevant les signaux différence de couleur issus de l'image source, une entrée recevant les signaux différence de couleur issus de l'image nouveau fond, et une entrée permettant de recevoir le signal clé de découpe Cr/Cb, luminance recevant en entrée le
    -   des moyens (7) d'incrustation du signal luminance recevant en entrée le signal luminance de l'image source, le signal luminance de l'image nouveau fond et la clé de découpe en luminance (clé Y),
    -   et des moyens (8) d'incrustation des détails, des ombres, et des transparences ayant une entrée destinée à recevoir les signaux luminance et différence de couleur provenant de l'image source, une entrée recevant le signal vidéo issu des moyens (6) d'incrustation des signaux différence de couleur et des moyens (7) d'incrustation du signal luminance, et une entrée recevant le signal clé de découpe en luminance (clé Y) de façon à obtenir une image incrustée (9).

10. Dispositif selon la revendication 9, caractérisé en ce que les moyens de calcul (4) comprennent des moyens (44) permettant d'éliminer des points isolés persistant dans le signal issu du calcul de gain, des moyens (45) permettant le filtrage horizontal sélectif du signal issu des moyens (44) permettant d'éliminer les points isolés et des moyens (46) de filtrage vertical du signal issu des moyens (45) permettant ledit filtrage horizontal sélectif.

**Patentansprüche**

1. Verfahren zur Einstanzung farbiger Videobilder, das darin besteht, ein aus einem Quellbild stammendes Objekt in ein Bild eines neuen Hintergrundes einzustanzen, wobei dieses Verfahren die Erzeugung eines Eintastsignals oder Key-Signals umfaßt, wobei das Key-Signal erlaubt, die Übergänge (T) festzusetzen, die es erlauben, die Kontur des Objekts in Bezug auf den neuen Hintergrund zu definieren, dadurch gekennzeichnet, daß

   - die Übergänge (T) es erlauben, die Breite der Kontur für jeden Punkt jeder Zeile des Quellbildes zu begrenzen, durch Vergleich des Wertes, der durch den Abstand zwischen der Farbe der Punkte des Quellbildes und der des neuen Hintergrundes angenommen wird, mit einer Schwelle (SEUIL), wobei die Punkte, die auf der einen und der anderen Seiten des Übergangs liegen, durchlaufen werden, bis ein minimaler Abstandswert (Dmin) und ein maximaler Abstandswert (Dmax) erhalten werden, die dem Beginn beziehungsweise dem Ende des Übergangs (T) entsprechen;
   - der Anstieg auf die Punkte des Quellbildes allein angewandt wird, wodurch es ermöglicht wird, die Breite der Kontur zu begrenzen, sowie proportional zu dem Wert des Abstandes (DIST) zwischen der Farbe des betreffenden Punktes und derjenigen des Hintergrundes.

2. Verfahren nach Anspruch 1, dadurch gekennzeichnet, daß die Mischung an jedem Punkt des Bildes derart ist, daß sie eine Funktion des Wertes des Key-Signals am betreffenden Punkt ist und daß auf der Breite der Kontur die Werte des Quellsignals und die Werte des Signals des neuen Hintergrundes auf Konstanten festgesetzt werden

3. Verfahren nach Anspruch 2, dadurch gekennzeichnet, daß die Breite der Kontur, die einem Übergang (T) entspricht, kleiner als die Breite ist, die durch die maximalen (Dmax) und minimalen (Dmin) Abstandswerte bestimmt wird.

4. Verfahren nach einem der vorhergehenden Ansprüche, dadurch gekennzeichnet, daß die Breite der Kontur vom Benutzer auf einen Maximalwert begrenzt wird.

5. Verfahren nach einem der vorhergehenden Ansprüche, dadurch gekennzeichnet, daß isolierte Pubkte, wie diejenigen, deren Key-Wert sich von demjenigen der benachbarten Punkte vollkommen unterscheidet, ermittelt und eliminiert werden.

6. Verfahren nach einem der vorhergehenden Ansprüche, dadurch gekennzeichnet, daß die horizontalen Übergänge ermittelt und geglättet werden.

7. Verfahren nach einem der vorhergehenden Ansprüche, dadurch gekennzeichnet, daß eine vertikale Filterung des Key-Signals durchgeführt wird.

8. Verfahren nach einem der vorhergehenden Ansprüche, dadurch gekennzeichnet, daß die Punkte des Quellbildes, die Details, Schatten oder Tranzparenzen entsprechen, ermittelt werden, indem die Luminanzdifferenz ($Ys - Y_0$) zwischen dem Quellbild und dem früheren Hintergrund mit einer oberen (SH) und einer unteren (SB) Schwelle verglichen werden und daß eine lineare Mischung zwischen dem neuen Hintergrund und der Quelle durchgeführt gemäß dem Wert dieser Luminanzdifferenz ($Ys - Y_0$) wird, falls sie zwischen den beiden Schwellen SB, SH liegt.

9. Vorrichtung zur Einstanzung farbiger Videobilder, die es erlaubt, in ein Bild eines neuen Hintergrunds ein Objekt einzustanzen, das aus einem Quellbild stammt, welches aus einem Luminanzsignal (Y) besteht, einem Farbdifferenzsignal für Blau ($C_B$) und einem Farbdifferenzsignal für Rot ($C_R$), die abgetastet und digitalisiert sind, dadurch gekennzeichnet, daß sie umfaßt:

   - Mittel zur Interpolation (3) der Farbdifferenzsignale ($C_B$, $C_R$), die es erlauben Abtastwerte der Farbe Blau ($C_B$) und Rot ($C_R$) zu erzeugen, deren Anzahl identisch zu der Anzahl der Abtastwerte der Luminanzsignale ist,
   - Berechnungsmittel (4), die es erlauben, auf der Grundlage der interpolierten Abtastwerte der Farbe Blau ($C_B$) und Rot ($C_R$) ein Key-Signal für die Chrominanz (clé Y) zu erzeugen, wobei die Berechnungsmittel (4) Mittel (40) umfassen, die es erlauben, für jeden Punkt jeder Zeile des Bildes den Abstand (DIST) zwischen der Farbe der Punkte des Quellbildes und derjenigen des neuen Hintergrundes zu berechnen, Mittel (41) zum Vergleich des Abstandes (DIST) mit eine Schwelle (SEUIL), um so ein Key-Signal zu erhalten, das es erlaubt, die Übergänge (T) festzusetzen, die die Kontur des einzustanzenden Objekts definieren, wobei jeder Übergang (T) durchlaufen wird, bis ein minimaler Abstandswert (Dmin) und ein maximaler Abstandwert (Dmax) erhalten wurden, die dem Anfang beziehungsweise dem Ende des Übergangs (T) entsprechen, Mittel (43) zur Berechnung des zum Wert des zuvor berechneten Abstands (DIST) proportionalen Anstiegs, für jeden zur Kontur gehörenden Punkt,

- Mittel (5), die ein Tiefpassfilter bilden und einen Eingang aufweisen, der das Key-Signal der Luminanz enpfängt, sowie einen Ausgang, der ein Key-Signal $C_R/C_B$ liefert, das das Einstanzen der Farbdifferenzsignale erlaubt,
- Mittel (6) zum Einstanzen der Farbdifferenzsignale mit einem Eingang, der die aus dem Quellbild abgeleiteten Farbdifferenzsignale empfängt, einem Eingang, der die von dem Bild des neuen Hintergrundes abgeleiteten Farbdifferenzsignale empfängt, sowie einem Eingang, der erlaubt, das Key-Signal $C_R/C_B$ zu empfangen,
- Mittel (7) zur Einstanzung des Luminanzsignals, die am Eingang das Luminanzsignal des Quellbildes empfangen, das Luminanzsignal des Bildes des neuen Hintergrundes sowie das Key-Signal der Luminanz (clé Y),
- sowie Mittel (8) zur Einstanzung von Details, Schatten und Tranzparenzen mit einem Eingang, der dazu bestimmt ist, die von dem Quellbild stammenden Luminanz- und Farbdifferenzsignal zu empfangen, einem Eingang, der das Videosignal empfängt, das aus den Mitteln (6) zur Einstanzung der Farbdifferenzsignale und den Mitteln (7) zur Einstanzung des Luminanzsignals abgeleitet wurde, sowie einem Eingang, der das Key-Signal der Luminanz (clé Y) empfängt, um so ein Mischbild (9) zu erhalten.

10. Vorrichtung nach Anspruch 9, dadurch gekennzeichnet, daß die Berechnungsmittel (4) Mittel (44) umfassen, die es erlauben, isolierte Punkte zu eliminieren, die in dem aus der Anstiegsberechnung abgeleiteten Signal fortbestehen, Mittel (45), die die selektive horizontale Filterung des Signals erlauben, das aus den Mitteln (44) abgeleitet wurde, die die Eliminierung der isolierten Punkte erlauben, sowie Mittel (46) zur vertikalen Filterung des Signals, das aus dens Mitteln (45) abgeleitet wurden, die die selektive horizontale Filterung erlauben.

## Claims

1. Method for the inlaying of colour video images consisting in inlaying a subject originating from a source image into a new background image, the said method comprising the generation of a switching signal, or dividing signal, to which a gain is applied, the said dividing key making it possible to control transitions (T) making it possible to define the contour of the said subject with respect to the said new background, characterized in that:

   - the transitions (T) make it possible to delimit the width of the said contour for each point of each line of the source image, by comparing with a threshold (THRESHOLD) the value taken by the distance (DIST) between the colour of the points of the source image and that of the new background, the points situated on either side of the transition (T) being traversed until a minimum distance value (Dmin) and a maximum distance value (Dmax) are obtained corresponding respectively to the start and end of the transition (T);
   - the gain is applied only to the points of the source image making it possible to delimit the width of the contour and in proportion to the value of the distance (DIST) between the colour of the point in question and that of the background.

2. Method according to Claim 1, characterised in that the mixing at each point of the image is such that it is a function of the value of the dividing key signal at the point in question and that the values of the source signal and of the new background signal are fixed at constants over the width of the contour.

3. Method according to Claim 2, characterised in that the width of contour corresponding to a transition (T) is less than the width determined by the maximum distance value (Dmax) and the minimum distance value (Dmin).

4. Method according to any one of the preceding claims, characterised in that the width of the contour is limited to a maximum value, by the user.

5. Method according to any one of the preceding claims, characterised in that isolated points, such that their key value is totally different from that of the adjacent points, are detected and eliminated.

6. Method according to any one of the preceding claims, characterised in that the horizontal transitions are detected and smoothed.

7. Method according to any one of the preceding claims, characterised in that a vertical filtering is carried on the dividing key signal.

8. Method according to any one of the preceding claims, characterised in that the points of the source image corresponding to details, shadows and transparencies are detected by comparing the luminance difference (Ys-Y0) between the source image and the former background with two thresholds, the high threshold (SH) and the low threshold (SB) and in that linear mixing between new background and source is carried out according to the value of this luminance difference (Ys-Y0) when it is included between the two thresholds (SB, SH).

9. Device for the inlaying of a colour video image making it possible to inlay into a new background image a subject originating from a source image made up of a luminance signal (Y), a blue colour difference signal (Cb) and a red colour difference signal (Cr) which are sampled and digitised, characterised in that it comprises:

   - means of interpolation (3) of the colour difference signals (Cb, Cr) making it possible to generate blue (Cb) and red (Cr) colour samples in identical number to the number of samples of luminance signals,
   - computing means (4) making it possible to generate a luminance dividing key (key Y) from interpolated blue (Cb) and red (Cr) colour samples, the said computing means (4) comprising means (40) making it possible to compute, for each point of each line of the source image, the distance (DIST) between the colour of the points of the source image and that of the new background, means (41) for comparing the said distance (DIST) with a threshold (THRESHOLD) so as to obtain a dividing key making it possible to control transitions (T) defining the contour of the subject to be inlaid, each transition (T) being traversed so as to obtain a minimum distance value (Dmin) and a maximum distance value (Dmax) corresponding to the start and end of the transition (T), means (43) for computing a gain proportional to the previously computed distance value (DIST), for each point belonging to the contour,
   - means (5) forming a low-pass filter having an input receiving the luminance dividing key and an output delivering a Cr/Cb dividing key signal making it possible to inlay the colour difference signals,
   - means (6) of inlaying the colour difference signals having an input receiving the colour difference signals arising from the source image, an input receiving the colour difference signals arising from the new background image, and an input making it possible to receive the Cr/Cb dividing key signal,
   - means (7) of inlaying the luminance signal receiving as input the luminance signal of the source image, the luminance signal of the new background image and the luminance dividing key (key Y),
   - and means (8) of inlaying details, shadows, and transparencies having an input intended to receive the luminance and colour difference signals originating from the source image, an input receiving the video signal arising from the means (6) of inlaying the colour difference signals and the means (7) of inlaying the luminance signal, and an input receiving the luminance dividing key signal (key Y) so as to obtain an inlaid image (9).

10. Device according to Claim 9, characterised in that the computing means (4) comprise means (44) making it possible to eliminate isolated points persisting in the signal arising from the gain computation, means (45) allowing the selective horizontal filtering of the signal arising from the means (44) making it possible to eliminate the isolated points and means (46) of vertical filtering of the signal arising from the means (45) allowing the said selective horizontal filtering.

FIG.1

FIG.2

$c_R$ FOND

40

$c_R$ INTERPOLÉ

$c_B$ INTERPOLÉ

CALCUL DES
DISTANCES

$c_B$ FOND

CALCUL DU
GAIN

43

EXTRACTION
CONTOUR
VARIABLE

42

COMPARAISON

41

SEUIL

44

ELIMINATION
DES POINTS
ISOLÉS

45

FILTRAGE
HORIZONTAL
SÉLECTIF

46

FILTRAGE
VERTICAL

CLÉ Y

EP 0 542 744 B1

FIG.3

1

0

T

FIG.4

Dmax

SEUIL EN
DISTANCE

T

D min

FIG.5

# FIG.6

# FIG.7

$$CLE = \frac{DIST - Dmin\ réduit}{Dmax\ réduit - Dmin\ réduit}$$

FIG.8

FIG.9